# EUROPEAN PATENT APPLICATION

(11) **EP 4 488 233 A1**
(43) Date of publication of application: **08.01.2025**
(21) Application number: 22929560.5
(22) Date of filing: 30.09.2022
(51) Int. Cl.: C01G 53/00, C01F 7/02, C01G 41/02, H01M 4/505, H01M 4/525, H01M 10/0525

(54) **MODIFIED MONOCRYSTAL HIGH-NICKEL TERNARY MATERIAL, PREPARATION METHOD THEREFOR AND USE THEREOF**

(30) Priority: 01.03.2022 CN 202210196330
(71) Applicant: Hefei Gotion High-Tech Power Energy Co., Ltd., Hefei, Anhui 230012 (CN)
(72) Inventor: GAO, Yuxian, Hefei, Anhui 230012 (CN); GAO, Wei, Hefei, Anhui 230012 (CN); LI, Daocong, Hefei, Anhui 230012 (CN); YANG, Maoping, Hefei, Anhui 230012 (CN); LIU, Xing, Hefei, Anhui 230012 (CN); LONG, Junjun, Hefei, Anhui 230012 (CN)
(74) Representative: Viering, Jentschura & Partner mbB Patent- und Rechtsanwälte
(86) International application number: PCT/CN2022/123241
(87) International publication number: WO 2023/165130

(57) **Abstract**

The present disclosure provides a modified monocrystal high-nickel ternary material, a preparation method therefor and use thereof. The preparation method includes: pre-sintering a high-nickel ternary hydroxide precursor under a condition of pure oxygen to obtain a pre-sintered material; fully mixing the pre-sintered material with a micro-powder of lithium hydroxide, a nano-dopant and an alumina pellet, and subjecting a mixture to a first sintering in a pure oxygen atmosphere after the alumina pellet is removed by sieving, followed by natural cooling in a pure oxygen atmosphere after the first sintering is completed to obtain a first sintered material; crushing the first sintered material, fully mixing it with a nano-coating agent, and then subjecting a mixed material to a second sintering in a pure oxygen atmosphere to obtain a second sintered material; and subjecting the second sintered material to crushing, sieving and demagnetizing to obtain the modified monocrystal high-nickel ternary material. The preparation method provided by the present disclosure is very simple and easy to industrialize, and the prepared modified monocrystal high-nickel ternary material has obviously reduced residual alkali content.

## Description

### Cross-Reference to Related Application

The present application is based upon and claims priority to Chinese Application No. 202210196330.7, filed March 1, 2022, the public contents of which are incorporated herein again as a whole by reference.

### Technical Field

The present disclosure relates to a modified monocrystal high-nickel ternary material, a preparation method therefor and use thereof, and belongs to the technical field of lithium ion batteries.

### Background

Due to high operating voltage, energy density, long service life, environmental friendliness and other characteristics, lithium ion batteries have become power supplies for new-generation electric vehicles, electric tools, electronic products and the like, and have been widely used in different fields such as energy, transportation, communication and the like at present. As consumers have increasingly higher requirements for endurance mileage, the energy density of the batteries is also gradually increased.

Ternary materials are a current research hotspot, and have been widely used due to high capacity and excellent cycle performance. For the ternary materials, higher nickel content indicates a higher capacity. Therefore, high-nickel ternary materials are ideal materials for preparing lithium batteries with high energy density. However, with continuous increase of the nickel content, the surface residual alkali content of the ternary materials is also increasing, and cycle stability is also deteriorating. In order to solve the above problems, a water washing method is usually used for treatment at present. However, when the nickel content reaches 90mol% or even higher, the materials are very sensitive to water, and water washing will lead to irreversible changes in material structures, thus affecting the capacity. In addition, the water washing will also lead to significant increase of the material cost.

Therefore, the provision of a novel modified monocrystal high-nickel ternary material, a preparation method therefor and use thereof has become a technical problem to be solved urgently in the field.

### Summary

In order to overcome the above disadvantages and defects, one purpose of the present disclosure is to provide a preparation method for a modified monocrystal high-nickel ternary material.

Another purpose of the present disclosure is to provide a modified monocrystal high-nickel ternary material, which is prepared by the preparation method for a modified monocrystal high-nickel ternary material.

Another purpose of the present disclosure is to provide use of the modified monocrystal high-nickel ternary material as a cathode material of a lithium ion battery.

Another purpose of the present disclosure is to provide a lithium ion battery, whose cathode material is the modified monocrystal high-nickel ternary material.

In order to achieve the above purposes, on the one hand, the present disclosure provides a preparation method for a modified monocrystal high-nickel ternary material. The preparation method includes the following steps:
S1: pre-sintering a high-nickel ternary hydroxide precursor under a condition of pure oxygen to obtain a pre-sintered material;
S2: fully mixing the pre-sintered material with a micro-powder of lithium hydroxide, a nano-dopant and an alumina pellet, and subjecting a mixture to a first sintering in a pure oxygen atmosphere after the alumina pellet is removed by sieving, followed by natural cooling in a pure oxygen atmosphere after the first sintering is completed to obtain a first sintered material;
S3: crushing the first sintered material, fully mixing the first sintered material with a nano-coating agent, and then subjecting a mixed material to a second sintering in a pure oxygen atmosphere to obtain a second sintered material; and
S4: subjecting the second sintered material to crushing, sieving and demagnetizing to obtain the modified monocrystal high-nickel ternary material.

Preferably, a particle size (D50) of the micro-powder of lithium hydroxide is of 5µm to 15µm.

As a specific embodiment of the preparation method of the present disclosure, in the S1, a composition of the high-nickel ternary hydroxide precursor is represented as NiₓCo_{y}Mn_{(1-x-y)}(OH)₂, where x is equal to or greater than 0.90 and less than 1, and y is greater than 0 and equal to or less than 0.1. The high-nickel ternary hydroxide precursor used in the present disclosure can be prepared by a conventional co-precipitation method in the field.

As a specific embodiment of the preparation method of the present disclosure, in the S1, a particle size range of the high-nickel ternary hydroxide precursor is 2.5µm to 4.5µm based on D50, a specific surface area of the high-nickel ternary hydroxide precursor is 8m²/g to 15m²/g, and a tap density of the high-nickel ternary hydroxide precursor is 1.6g/cm³ to 2.0g/cm³.

As a specific embodiment of the preparation method of the present disclosure, in the S1, the pre-sintering is performed at 400°C to 600°C for 3h to 5h.

As a specific embodiment of the preparation method of the present disclosure, in the S2, a particle size range of the micro-powder of lithium hydroxide is 5µm to 15µm based on D50.

As a specific embodiment of the preparation method of the present disclosure, in the S2, the pre-sintered material and the micro-powder of lithium hydroxide are proportioned at a Li-M molar ratio of 1.0 to 1.1, where M represents a transition metal in the pre-sintered material.

As a specific embodiment of the preparation method of the present disclosure, in the S2, a diameter range of the alumina pellet is 15mm to 25mm.

As a specific embodiment of the preparation method of the present disclosure, in the S2, based on a total weight of the mixture as 100%, a mass content of the alumina pellet is 30% to 60%.

As a specific embodiment of the preparation method of the present disclosure, in the S2, the nano-dopant includes one or more of Al₂O₃, ZrO₂, WOs, MgO, TiO₂, B₂O₃, SrCO₃, NbzOs and La₂O₃.

As a specific embodiment of the preparation method of the present disclosure, in the S2, a molar content of the nano-dopant of a molar content of the high-nickel ternary hydroxide precursor is 0.1% to 0.5%.

In the preparation method for a modified monocrystal high-nickel ternary material provided by the present disclosure, in the process of high temperature sintering (the second sintering), the nano-dopant is doped into a crystal structure of a monocrystal material to partly occupy the position of Li and partly occupy the position of a transition metal, which can be considered to be uniformly dispersed. The nano-dopant used in the present disclosure can improve the structural stability of the obtained modified monocrystal high-nickel ternary material.

As a specific embodiment of the preparation method of the present disclosure, in the S2, the mixing can be performed in a three-dimensional mixer, and the three-dimensional mixer is a conventional device.

As a specific embodiment of the preparation method of the present disclosure, in the S2, the first sintering includes: performing sintering at a first sintering temperature for a certain period of time, then increasing a temperature to a second sintering temperature for sintering for a certain period of time, and finally performing annealing to a third sintering temperature for sintering for a certain period of time.

As a specific embodiment of the preparation method of the present disclosure, in the S2, the first sintering includes: performing sintering at 450°C to 550°C for 3h to 6h, then increasing the second sintering temperature to 730°C to 800°C for sintering for 12h to 18h, and finally performing annealing at the third sintering temperature of 500°C to 700°C for sintering for 1h to 3h.

As a specific embodiment of the preparation method of the present disclosure, in the S3, a particle size range of a material obtained after the crushing is 3µm to 5µm based on D50. In some embodiments of the present disclosure, the crushing in the S3 could be airflow crushing.

As a specific embodiment of the preparation method of the present disclosure, in the S3, the nano-coating agent includes one or more of Al₂O₃, ZrO₂, WO₃, TiO₂, H₃BO₃, Co(OH)₂, LiAlO₂ and Li_{1.3}Al_{0.3}Ti_{1.7}(PO₄)₃.

As a specific embodiment of the preparation method of the present disclosure, in the S3, a mass of the nano-coating agent of a mass of the first sintered material is 0.1% to 1%.

As a specific embodiment of the preparation method of the present disclosure, in the S3, the mixing can be performed in a high-speed mixer, and the high-speed mixer is also a conventional device.

As a specific embodiment of the preparation method of the present disclosure, in the S3, the second sintering is performed at a temperature of 400°C to 700°C for 4h to 6h.

As a specific embodiment of the preparation method of the present disclosure, in the S4, processes of the crushing, the sieving and the demagnetizing are performed in an environment with a relative humidity of less than 10%. In some embodiments of the present disclosure, the crushing in the S4 could be implemented by using a stone mortar mill.

On the other hand, the present disclosure further provides a modified monocrystal high-nickel ternary material. The modified monocrystal high-nickel ternary material is prepared by the preparation method for a modified monocrystal high-nickel ternary material, which is a modified monocrystal high-nickel ternary material LiNiₓCo_{y}Mn_{(1-x-y)}O₂ coated with a nano-coating agent, where x is equal to or greater than 0.90 and less than 1, and y is greater than 0 and equal to or less than 0.1.

According to the preparation method provided by the present disclosure, the nano-coating agent is used for dry coating. In the modified monocrystal high-nickel ternary material, the nano-coating agent coats the modified monocrystal high-nickel ternary material in the form of spot coating.

On another hand, the present disclosure further provides use of the modified monocrystal high-nickel ternary material as a cathode material of a lithium ion battery.

On another hand, the present disclosure further provides a lithium ion battery, where a cathode material of the lithium ion battery is the modified monocrystal high-nickel ternary material.

Compared with the prior art, the present disclosure has the following beneficial effects.
(1) In the present disclosure, a suitable high-nickel ternary hydroxide precursor is screened first, the high-nickel ternary hydroxide precursor is pre-sintered, and then the pre-sintered high-nickel ternary hydroxide precursor is used for preparing a modified monocrystal high-nickel ternary material. Compared with a modified high-nickel ternary material prepared by using a high-nickel ternary hydroxide precursor without pre-sintering, the modified monocrystal high-nickel ternary material provided by the present disclosure has obviously reduced residual alkali content. In addition, water washing modification or special coating modification is not required subsequently, no wastewater is produced, and the production cost is greatly reduced.
(2) Although pre-sintering is increased once for preparing the modified monocrystal high-nickel ternary material in the present disclosure, the loading amount during the first sintering can be increased by about 20% as water in the pre-sintered high-nickel ternary hydroxide precursor is removed. Therefore, the comprehensive cost of the preparation method provided by the present disclosure is not increased, which is far lower than the cost of preparing a high-nickel ternary material by a water washing modification method in the prior art in the field.
(3) When the modified monocrystal high-nickel ternary material is prepared in the present disclosure, the high-nickel ternary hydroxide precursor is pre-sintered, and an alumina pellet is added by a three-dimensional mixer for mixing. As the precursor will have micro-cracks due to collision with the alumina pellet, the sintered monocrystal material, namely the first sintered material, could be easily crushed.
(4) The preparation method for a modified monocrystal high-nickel ternary material provided by the present disclosure is very simple and easy to industrialize, and has a broad application prospect.

### Brief Description of the Drawings

In order to describe technical schemes in the embodiments of the present disclosure or in the prior art more clearly, drawings required to be used in description of the embodiments are briefly introduced below. Obviously, the drawings described below are some embodiments of the present disclosure. For persons of ordinary skill in the art, other drawings can also be obtained according to these drawings without creative labor.
Fig. 1 is a diagram showing comparison of the surface residual alkali content of a modified monocrystal high-nickel ternary material provided in Example 1 of the present disclosure and a modified high-nickel ternary material provided in Comparative Example 1.
Fig. 2 is an SEM image of the modified monocrystal high-nickel ternary material provided in Example 1 of the present disclosure.
Fig. 3 is an SEM image of the modified high-nickel ternary material provided in Comparative Example 1.
Fig. 4 is an SEM image of a modified monocrystal high-nickel ternary material provided in Comparative Example 2.
Fig. 5 shows first cycle charge and discharge curves of a lithium ion battery assembled by using the modified monocrystal high-nickel ternary material provided in Example 1 of the present disclosure as a cathode material.
Fig. 6 shows first cycle charge and discharge curves of a lithium ion battery assembled by using the modified high-nickel ternary material provided in Comparative Example 1 as a cathode material.

### Detailed Description of the Embodiments

The "range" disclosed in the present disclosure is given in the form of a lower limit and an upper limit. One or more lower limits and one or more upper limits can be available, respectively. A given range is defined by selecting a lower limit and an upper limit. A selected lower limit and an upper limit define boundaries of a particular range. All ranges defined in this way can be combined, and that is to say, any lower limit can be combined with any upper limit to form a range. For example, when the ranges of 60 to 120 and 80 to 110 are listed for specific parameters, it is understood that the ranges of 60 to 110 and 80 to 120 can also be expected. In addition, when minimum range values listed are 1 and 2 and maximum range values listed are 3, 4 and 5, all the following ranges can be expected: 1 to 3, 1 to 4, 1 to 5, 2 to 3, 2 to 4 and 2 to 5.

In the present disclosure, unless otherwise specified, the numerical range "a to b" represents an abbreviated representation of any combination of real numbers between a and b, where both a and b are real numbers. For example, the numerical range "0 to 5" represents that all real numbers of "0 to 5" have been listed in the present disclosure, and the "0 to 5" is only an abbreviated representation of a combination of these values.

In the present disclosure, unless otherwise specified, all embodiments and preferred embodiments mentioned in the present disclosure may be combined with each other to form new technical schemes.

In the present disclosure, unless otherwise specified, all technical features and preferred features mentioned in the present disclosure can be combined with each other to form new technical schemes.

In order to make the purposes, technical schemes and advantages of the present disclosure more clearly understood, the present disclosure is further described in detail below in combination with the attached drawings and embodiments. The embodiments described below are some embodiments of the present disclosure, rather than all of the embodiments, which are used only to describe the present disclosure and should not be regarded as limiting the scope of the present disclosure. Based on the embodiments of the present disclosure, all other embodiments obtained by persons of ordinary skill in the art without making creative effort would fall within the scope of protection of the present disclosure. Those without specific conditions in the embodiments are used in accordance with conventional conditions or conditions recommended by manufacturers. All reagents or instruments used without specific manufacturers are conventional products that can be purchased on the market.

### Example 1

The example provided a modified monocrystal high-nickel ternary material, which was prepared by a preparation method including the following steps:
S1: a high-nickel ternary hydroxide precursor Ni_{0.95}Co_{0.04}Mn_{0.01}(OH)₂ prepared by a co-precipitation method was pre-sintered under a condition of pure oxygen at 500°C for 5h to obtain a pre-sintered material,
where the high-nickel ternary hydroxide precursor Ni_{0.95}C_{0.04}Mn_{0.01}(OH)₂ had a particle size (D50) of 4µm, a specific surface area of 11m²/g and a tap density of 1.7g/cm³;
S2: the pre-sintered precursor, namely the pre-sintered material, micro-powder of lithium hydroxide, nano-ZrO₂ and alumina pellet were added into a three-dimensional mixer for full mixing, where the pre-sintered material and the micro-powder of lithium hydroxide were proportioned at a Li element - transition metal element molar ratio of 1.03, a molar content of the nano-ZrO₂ was 0.2% of a molar content of the high-nickel ternary hydroxide precursor, a particle size (D50) of the micro-powder of lithium hydroxide was 7.5 µm, the alumina pellet was 40% of a total mass of a mixture, and a diameter of the alumina pellet was 20mm;
the alumina pellet was removed by sieving of the mixture, and then performed a first sintering of the mixture in a pure oxygen atmosphere, where the first sintering included: performed sintering at 500°C for 5h, then increased the temperature to 760°C for sintering for 15h, and finally performed annealing to 550°C for sintering for 2h; and performed natural cooling in a pure oxygen atmosphere after the sintering was completed to obtain a first sintered material;
S3: the first sintered material was performed an airflow crushing to a particle size (D50) of 4.0µm, and the crushed first sintered material and nano-Al₂O₃ were added into a high-speed mixer for full mixing, where a mass of the nano-Al₂O₃ was 0.15% of a mass of the first sintered material; and then a mixed material was sintered in a pure oxygen atmosphere at 500°C for 5h to obtain a second sintered material; and
S4: the material obtained after the second sintering, namely the second sintered material, was crushed with a stone mortar mill, sieved and demagnetized to obtain the modified monocrystal high-nickel ternary material, where a relative humidity of an entire environment for the crushing, sieving and demagnetizing was controlled to be less than 10%.

The modified monocrystal high-nickel ternary material provided in this example was a modified monocrystal high-nickel ternary material (LiNi_{0.95}Co_{0.04}Mn_{0.01}O₂) coated with nano-Al₂O₃.

### Example 2

The example provided a modified monocrystal high-nickel ternary material, which was prepared by a preparation method including the following steps:
S1: a high-nickel ternary hydroxide precursor Ni_{0.92}Co_{0.04}Mn_{0.04}(OH)₂ prepared by a co-precipitation method was pre-sintered under a condition of pure oxygen at 550°C for 5h to obtain a pre-sintered material,
where the high-nickel ternary hydroxide precursor Ni_{0.92}C_{0.04}Mn_{0.04}(OH)₂ had a particle size (D50) of 2.5 µm, a specific surface area of 13m²/g and a tap density of 1.7g/cm³;
S2: the pre-sintered precursor, namely the pre-sintered material, micro-powder of lithium hydroxide, nano-ZrO₂ and alumina pellet were added into a three-dimensional mixer for full mixing, where the pre-sintered material and the micro-powder of lithium hydroxide were proportioned at a Li element - transition metal element molar ratio of 1.02, the molar content of the nano-ZrO₂ was 0.3% of the molar content of the high-nickel ternary hydroxide precursor, the particle size (D50) of the micro-powder of lithium hydroxide was 15µm, the alumina pellet was 50% of a total mass of a mixture, and a diameter of the alumina pellet was 25mm;
the alumina pellet was removed by sieving of the mixture, and then performed a first sintering of the mixture in a pure oxygen atmosphere, where the first sintering included: performed sintering at 500°C for 4h, then increased the temperature to 780°C for sintering for 15h, and finally performed annealing to 600°C for sintering for 2h; and performed natural cooling in an oxygen atmosphere after the sintering was completed to obtain a first sintered material;
S3: the material obtained after the first sintering, namely the first sintered material, was performed an airflow crushing to a particle size (D50) of 4.0µm, and the crushed first sintered material, nano-Al₂O₃ and nano-WO₃ were added into a high-speed mixer for full mixing, where a total mass of the nano-Al₂O₃ and the nano-WO₃ was 0.6% of a mass of the first sintered material; and then a mixed material was sintered in a pure oxygen atmosphere at 600°C for 3h to obtain a second sintered material; and
S4: the material obtained after the second sintering, namely the second sintered material, was crushed with a stone mortar mill, sieved and demagnetized to obtain the modified monocrystal high-nickel ternary material, where a relative humidity of an entire environment for the crushing, sieving and demagnetizing was controlled to be less than 10%.

The modified monocrystal high-nickel ternary material provided in this example was a modified monocrystal high-nickel ternary material LiNi_{0.92}Co_{0.04}Mn_{0.04}O₂ coated with nano-Al₂O₃ and nano-WO₃.

### Example 3

The example provided a modified monocrystal high-nickel ternary material, which was prepared by a preparation method including the following steps:
S1: a high-nickel ternary hydroxide precursor Ni_{0.96}Co_{0.02}Mn_{0.02}(OH)₂ prepared by a co-precipitation method was pre-sintered under a condition of pure oxygen at 450°C for 4h to obtain a pre-sintered material,
where the high-nickel ternary hydroxide precursor Ni_{0.96}Co_{0.02}Mn_{0.02}(OH)₂ had a particle size (D50) of 3.5µm, a specific surface area of 8m²/g and a tap density of 1.75g/cm³;
S2: the pre-sintered precursor, micro-powder of lithium hydroxide, nano-ZrO₂, nano-TiO₂ and alumina pellet were added into a three-dimensional mixer for full mixing, where the pre-sintered material and the micro-powder of lithium hydroxide were proportioned at a Li element - transition metal element molar ratio of 1.01, a molar content of the nano-ZrO₂ was 0.4% of a molar content of the high-nickel ternary hydroxide precursor, a particle size (D50) of the micro-powder of lithium hydroxide was 5 µm, the alumina pellet was 30% of a total mass of a mixture, and a diameter of the alumina pellet was 25mm;
the alumina pellet was removed by sieving of the mixture, and then performed a first sintering of the mixture in a pure oxygen atmosphere, where the first sintering included: performed sintering at 500°C for 5h, then increased the temperature to 750°C for sintering for 15h, and finally performed annealing to 500°C for sintering for 2h; and performed natural cooling in an oxygen atmosphere after the sintering was completed to obtain a first sintered material;
S3: the material obtained after the first sintering, namely the first sintered material, was performed an airflow crushing to a particle size (D50) of 3.5µm, and the crushed first sintered material and nano-Al₂O₃ were added into a high-speed mixer for full mixing, where a mass of the nano-Al₂O₃ was 0.5% of a mass of the first sintered material; and then a mixed material was sintered in a pure oxygen atmosphere at 500°C for 5h to obtain a second sintered material; and
S4: the material obtained after the second sintering, namely the second sintered material, was crushed with a stone mortar mill, sieved and demagnetized to obtain the modified monocrystal high-nickel ternary material, where a relative humidity of an entire environment for the crushing, sieving and demagnetizing was controlled to be less than 10%.

The modified monocrystal high-nickel ternary material provided in this example was a modified monocrystal high-nickel ternary material LiNi_{0.96}Co_{0.02}Mn_{0.02}O₂ coated with nano-Al₂O₃.

### Example 4

Compared with Example 1, differences were only as follows: S1: a high-nickel ternary hydroxide precursor Ni_{0.92}C_{0.04}Mn_{0.04}(OH)₂ prepared by a co-precipitation method was pre-sintered under a condition of pure oxygen at 400°C for 3h to obtain a pre-sintered material.

### Example 5

Compared with Example 1, differences were only as follows: S1: a high-nickel ternary hydroxide precursor Ni_{0.92}C_{0.04}Mn_{0.04}(OH)₂ prepared by a co-precipitation method was pre-sintered under a condition of pure oxygen at 600°C for 5h to obtain a pre-sintered material.

### Example 6

Compared with Example 1, differences were only as follows: S1: a high-nickel ternary hydroxide precursor Ni_{0.92}C_{0.04}Mn_{0.04}(OH)₂ prepared by a co-precipitation method was pre-sintered under a condition of pure oxygen at 700°C for 2h to obtain a pre-sintered material.

### Example 7

Compared with Example 1, a difference was only as follows: the alumina pellet was 60% of the total mass of a mixture.

### Example 8

Compared with Example 1, a difference was only as follows: a diameter of the alumina pellet was 15mm.

### Example 9

Compared with Example 1, a difference was only as follows: a diameter of the alumina pellet was 30mm.

### Comparative Example 1

The comparative example provided a modified high-nickel ternary material, which was prepared by a preparation method including the following steps:
S1: a high-nickel ternary hydroxide precursor Ni_{0.95}Co_{0.04}Mn_{0.01}(OH)₂ prepared by a co-precipitation method, micro-powder of lithium hydroxide, nano-ZrO₂ and alumina pellet were added into a high-speed mixer for full mixing, where the high-nickel ternary hydroxide precursor Ni_{0.95}C_{0.04}Mn_{0.01}(OH)₂ and the micro-powder of lithium hydroxide were proportioned at a Li element - transition metal element molar ratio of 1.03, a molar content of the nano-ZrO₂ was 0.2% of a molar content of the high-nickel ternary hydroxide precursor, the high-nickel ternary hydroxide precursor Ni_{0.95}Co_{0.04}Mn_{0.01}(OH)₂ had a particle size (D50) of 4µm, a specific surface area of 11m²/g and a tap density of 1.7g/cm³, a particle size (D50) of the micro-powder of lithium hydroxide was 7.5µm, the alumina pellet was 40% of a total mass of a mixture, and a diameter of the alumina pellet was 20 mm;
the alumina pellet was removed by sieving of the mixture, and then performed a first sintering in a pure oxygen atmosphere, where the first sintering included: performed sintering at 500°C for 5h, then increased the temperature to 760°C for sintering for 15h, and finally performed annealing to 550°C for sintering for 2h; and performed natural cooling in an oxygen atmosphere after the sintering was completed to obtain a first sintered material;
S2: the material obtained after the first sintering, namely the first sintered material, was performed an airflow crushing to a particle size (D50) of 4.0µm, and the crushed first sintered material and nano-Al₂O₃ were added into a high-speed mixer for full mixing, where a mass of the nano-Al₂O₃ was 0.15% of a mass of the first sintered material; and then a mixed material was sintered in a pure oxygen atmosphere at 500°C for 5h to obtain a second sintered material; and
S3: the material obtained after second sintering, namely the second sintered material, was crushed with a stone mortar mill, sieved and demagnetized to obtain the modified monocrystal high-nickel ternary material, where a relative humidity of an entire environment for the crushing, sieving and demagnetizing was controlled to be less than 10%.

The modified high-nickel ternary material provided in this comparative example was a modified monocrystal high-nickel ternary material LiNi_{0.95}Co_{0.04}Mn_{0.01}O₂ coated with nano-Al₂O₃.

### Comparative Example 2

The comparative example provided a modified monocrystal high-nickel ternary material, which was prepared by a preparation method including the following steps:
S1: a high-nickel ternary hydroxide precursor Ni_{0.95}Co_{0.04}Mn_{0.01}(OH)₂ prepared by a co-precipitation method was pre-sintered under a condition of pure oxygen at 500°C for 5h to obtain a pre-sintered material,
where the high-nickel ternary hydroxide precursor Ni_{0.95}Co_{0.04}Mn_{0.01}(OH)₂ had a particle size (D50) of 4µm, a specific surface area of 11m²/g and a tap density of 1.7g/cm³;
S2: the pre-sintered precursor, namely the pre-sintered material, micro-powder of lithium hydroxide and nano-ZrO₂ were added into a high-speed mixer for full mixing, where the high-nickel ternary hydroxide precursor Ni_{0.95}Co_{0.04}Mn_{0.01}(OH)₂ and the micro-powder of lithium hydroxide were proportioned at a Li element - transition metal element molar ratio of 1.03, a molar content of the nano-ZrO₂ was 0.2% of a molar content of the high-nickel ternary hydroxide precursor, and a particle size (D50) of the micro-powder of lithium hydroxide was 7.5µm;
performed a first sintering of the mixture in a pure oxygen atmosphere, where the first sintering included: performed sintering at 500°C for 5h, then increased the temperature to 760°C for sintering for 15h, and finally performed annealing to 550°C for sintering for 2h; and performed natural cooling in a pure oxygen atmosphere after the sintering was completed to obtain a first sintered material;
S3: the first sintered material was performed an airflow crushing to a particle size (D50) of 4.0µm, and the crushed first sintered material and nano-Al₂O₃ were added into a high-speed mixer for full mixing, where a mass of the nano-Al₂O₃ was 0.15% of a mass of the first sintered material; and then a mixed material was sintered in a pure oxygen atmosphere at 500°C for 5h to obtain a second sintered material; and
S4: the material obtained after the second sintering, namely the second sintered material, was crushed with a stone mortar mill, sieved and demagnetized to obtain the modified monocrystal high-nickel ternary material, where a relative humidity of an entire environment for the crushing, sieving and demagnetizing was controlled to be less than 10%.

The modified monocrystal high-nickel ternary material provided in this comparative example was a modified monocrystal high-nickel ternary material LiNi_{0.95}Co_{0.04}Mn_{0.01}O₂ coated with nano-Al₂O₃.

### Comparative Example 3

The comparative example provided a modified monocrystal high-nickel ternary material, which was prepared by a preparation method including the following steps:
S1: a high-nickel ternary hydroxide precursor Ni_{0.95}Co_{0.04}Mn_{0.01}(OH)₂ prepared by a co-precipitation method was pre-sintered under a condition of pure oxygen at 500°C for 5h to obtain a pre-sintered material,
where the high-nickel ternary hydroxide precursor Ni_{0.95}C_{0.04}Mn_{0.01}(OH)₂ had a particle size (D50) of 4µm, a specific surface area of 11m²/g and a tap density of 1.7g/cm³;
S2: the pre-sintered precursor, namely the pre-sintered material, micro-powder of lithium hydroxide and alumina pellet were added into a three-dimensional mixer for full mixing, where the pre-sintered material and the micro-powder of lithium hydroxide were proportioned at a Li element - transition metal element molar ratio of 1.03, a particle size (D50) of the micro-powder of lithium hydroxide was 7.5µm, the alumina pellet was 40% of a total mass of a resulting mixture, and a diameter of the alumina pellet was 20mm;
the alumina pellet was removed by sieving of the mixture, and then performed a first sintering in a pure oxygen atmosphere, where the first sintering included: performed sintering at 500°C for 5h, then increased the temperature to 760°C for sintering for 15h, and finally performed annealing to 550°C for sintering for 2h; and performed natural cooling in a pure oxygen atmosphere after the sintering was completed to obtain a first sintered material;
S3: the first sintered material was performed an air flow crushing to a particle size (D50) of 4.0µm, and the crushed first sintered material and nano-Al₂O₃ were added into a high-speed mixer for full mixing, where a mass of the nano-Al₂O₃ was 0.15% of a mass of the first sintered material; and then a mixed material was sintered in a pure oxygen atmosphere at 500°C for 5h to obtain a second sintered material; and
S4: the material obtained after the second sintering, namely the second sintered material, was crushed with a stone mortar mill, sieved and demagnetized to obtain the modified monocrystal high-nickel ternary material, where a relative humidity of an entire environment for the crushing, sieving and demagnetizing was controlled to be less than 10%.

The modified monocrystal high-nickel ternary material provided in this comparative example was a modified monocrystal high-nickel ternary material LiNi_{0.95}Co_{0.04}Mn_{0.01}O₂ coated with nano-Al₂O₃.

### Test Example 1

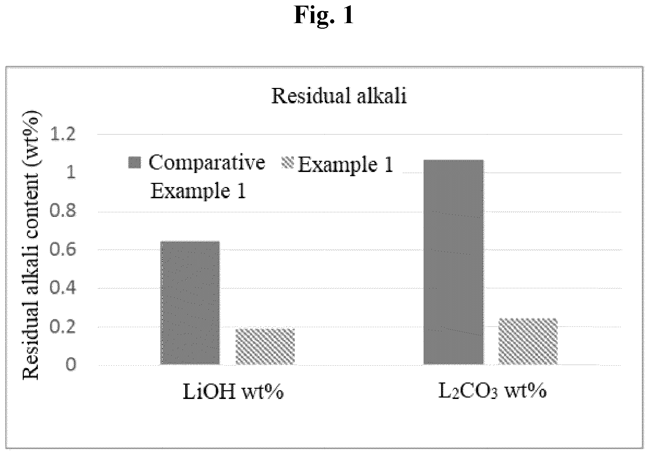

In the test example, a surface residual alkali content of the high-nickel ternary materials provided in examples and comparative examples was separately detected by an existing conventional method in the field, and performance effects are shown in Table 1. Meanwhile, as could also be seen from Fig. 1, compared with the modified high-nickel ternary material prepared by using the high-nickel ternary hydroxide precursor without pre-sintering in Comparative Example 1, the modified monocrystal high-nickel ternary material prepared by using the pre-sintered high-nickel ternary hydroxide precursor in Example 1 of the present disclosure has an obviously reduced residual alkali (LiOH and Li₂CO₃) content. Residual alkali in a high-nickel ternary material mainly affects the processing performance and high temperature storage performance of the material. Specifically, when the residual alkali content of a material is high, a jelly phenomenon easily occurs during slurry preparation, leading to difficult coating. In addition, when the residual alkali content is high, a battery made of the material with high residual alkali content has more serious gas production under high temperature conditions, leading to attenuation of the electrochemical performance of the battery or leading to swelling or electrolyte leakage of the battery.

### Test Example 2

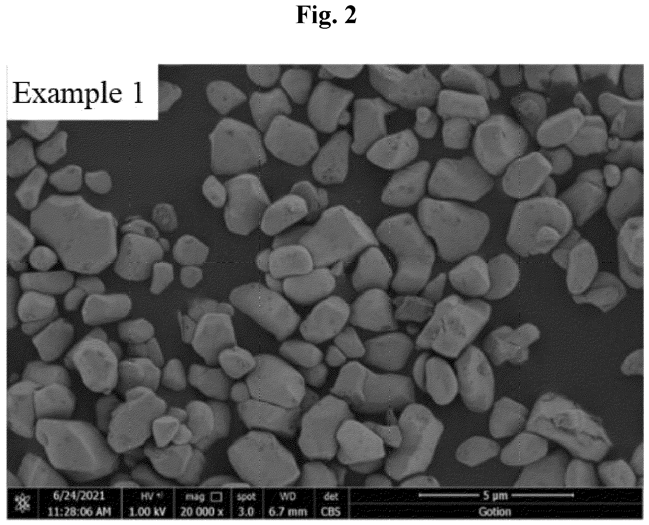

In the test example, the modified monocrystal high-nickel ternary material provided in Example 1, the modified high-nickel ternary material provided in Comparative Example 1 and the modified monocrystal high-nickel ternary material provided in Comparative Example 2 were separately analyzed by a scanning electron microscope, and resulting SEM images are shown in Fig. 2, Fig. 3 and Fig. 4 respectively.

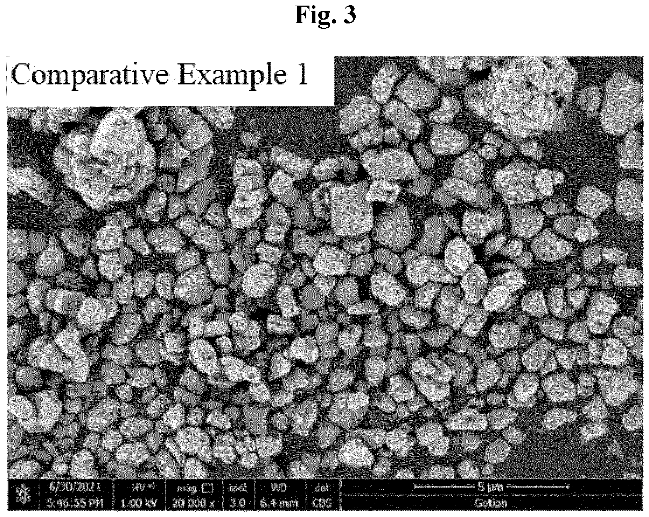

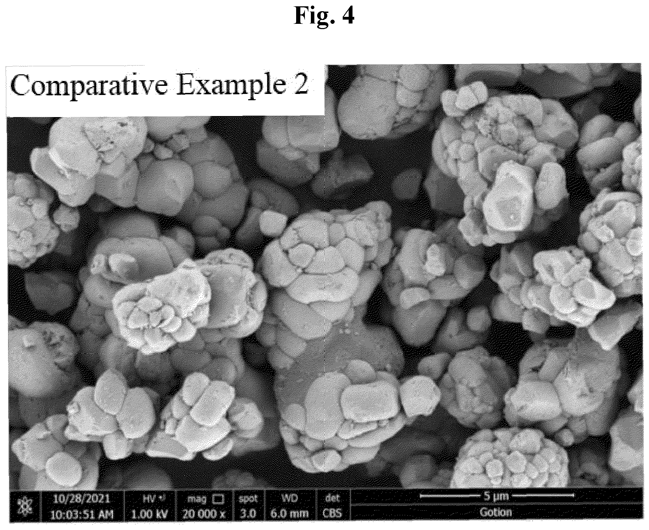

By comparing Fig. 2 and Fig. 3, it could be seen that the modified high-nickel ternary material provided in Comparative Example 1 has relatively small particles and agglomerated particles, while the modified monocrystal high-nickel ternary material provided in Example 1 has larger particles and basically no agglomerated particles, which has good single crystal particle morphology. Thus, it could be seen that in Example 1, by pre-sintering the high-nickel ternary hydroxide precursor and preparing the modified high-nickel ternary material using the pre-sintered high-nickel ternary hydroxide precursor, the obtained modified high-nickel ternary material could have good single crystal particle morphology. By comparing Fig. 2 and Fig. 4, it could be seen that when the alumina pellet was added for mixing during preparation of the modified monocrystal high-nickel ternary material in Example 1, the prepared material has larger single crystal particles and no agglomeration between primary particles, which has better single crystal morphology.

### Test Example 3

In the test example, the modified monocrystal high-nickel ternary material provided in Example 1 and the modified high-nickel ternary material provided in Comparative Example 1 were used as a cathode material and then assembled to obtain button-type lithium ion batteries, respectively. Assembly of the button-type lithium ion batteries specifically includes the following steps: PVDF was dissolved into NMP first, then adding the cathode material and conductive carbon black for full mixing, a mixture was evenly coated on an aluminum foil to obtain a positive plate, then cutting the positive plate into a wafer with a diameter of 12mm by using a mold, and finally, assembling the cut positive plate wafer with a separator, a lithium plate and an electrolyte in a glove box to form the button-type lithium ion batteries, respectively.

The mass ratio of the cathode material, the PVDF to the conductive carbon black was 90:5:5.

A polypropylene film with a thickness of 20µm was used as the separator.

The electrolyte included LiPF₆ and a solvent, where a concentration of the LiPF₆ is 1mol/L, and the solvent included EC, DMC and EMC at a volume ratio of 1:1:1.

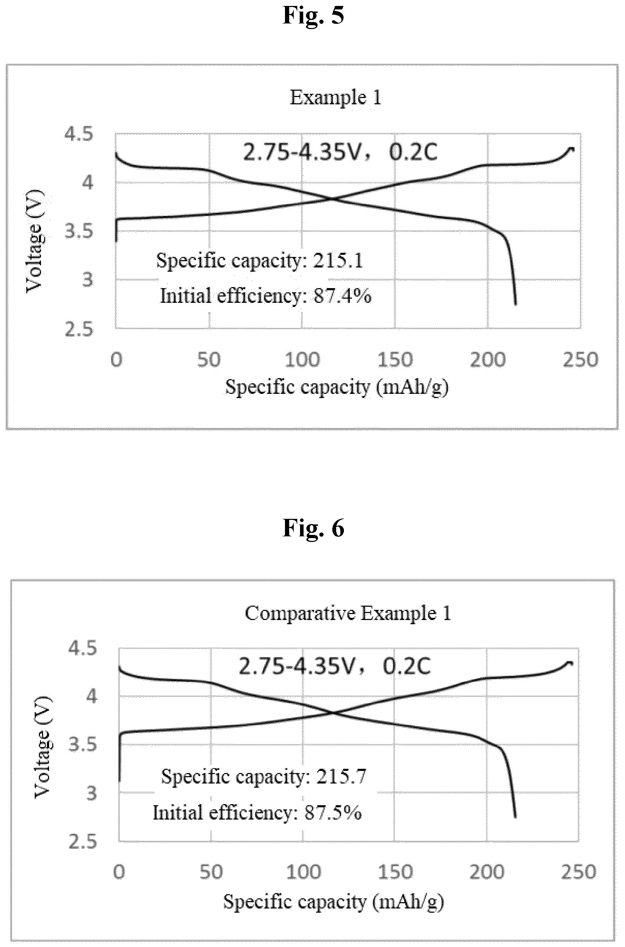

After the assembly is completed, first cycle charge and discharge curves of the lithium ion batteries were measured by an existing conventional method in the field, as shown in Fig. 5 and Fig. 6, respectively. As could be seen from Fig. 5 and Fig. 6, the specific discharge capacity and initial efficiency of the lithium ion battery assembled by using the modified monocrystal high-nickel ternary material provided in Example 1 of the present disclosure as the cathode material are equivalent to that of the lithium ion battery assembled by using the modified high-nickel ternary material provided in Comparative Example 1 as the cathode material.

When a high-nickel ternary material is prepared by a conventional sintering method, the capacity of the obtained material is usually decreased with increase of sintered single crystal particles. However, the modified monocrystal high-nickel ternary materials provided in examples of the present disclosure not only had lower residual alkali contents, but also had larger single crystal particles and better dispersion. In addition, the preparation method had no effect on the capacity and initial efficiency of the obtained modified monocrystal high-nickel ternary materials.

The residual alkali content and performance characterization of the specific discharge capacity and initial efficiency of lithium ion batteries in examples and comparative examples are shown in Table 1.

**Table 1**

| | Residual alkali (LiOH+Li₂CO₃) content (wt%) | Specific discharge capacity at 0.2C (mAh/g) | Initial efficiency (%) | Capacity retention rate after 50 cycles (%) |
|---|---|---|---|---|
| Example 1 | 0.43 | 215.1 | 87.4 | 95.0 |
| Example 2 | 0.39 | 212.3 | 86.8 | 95.6 |
| Example 3 | 0.45 | 216.1 | 87.7 | 94.1 |
| Example 4 | 0.45 | 210.3 | 86.5 | 95.5 |
| Example 5 | 0.48 | 210.5 | 86.0 | 95.1 |
| Example 6 | 0.51 | 209.0 | 85.8 | 95.0 |
| Example 7 | 0.40 | 212.5 | 87.0 | 95.8 |
| Example 8 | 0.35 | 213.0 | 87.0 | 94.8 |
| Example 9 | 0.47 | 210.0 | 86.0 | 95.0 |
| Comparative Example 1 | 1.71 | 215.7 | 87.5 | 91.5 |
| Comparative Example 2 | 0.65 | 215.0 | 87.6 | 92.5 |
| Comparative Example 3 | 0.45 | 215.5 | 87.0 | 93.0 |

In summary, in an example of the present disclosure, a suitable high-nickel ternary hydroxide precursor is screened first, the high-nickel ternary hydroxide precursor is pre-sintered, and then the pre-sintered high-nickel ternary hydroxide precursor is used for preparing a modified monocrystal high-nickel ternary material. Compared with a modified high-nickel ternary material prepared by using a high-nickel ternary hydroxide precursor without pre-sintering, the modified monocrystal high-nickel ternary material provided in an example of the present disclosure has obviously reduced residual alkali content. In addition, water washing modification or special coating modification is not required subsequently, no wastewater is produced, and the production cost is greatly reduced.

Although pre-sintering is increased once for preparing the modified monocrystal high-nickel ternary material in an example of the present disclosure, the loading amount during the first sintering can be increased by about 20% as water in the pre-sintered high-nickel ternary hydroxide precursor is removed. Therefore, the comprehensive cost of the preparation method provided in an example of the present disclosure is not increased, which is far lower than the cost of preparing a high-nickel ternary material by a water washing modification method in the prior art in the field.

When the modified monocrystal high-nickel ternary material is prepared in an example of the present disclosure, the high-nickel ternary hydroxide precursor is pre-sintered, and an alumina pellet is added by a three-dimensional mixer for mixing. As the precursor will have micro-cracks due to collision with the alumina pellet, the sintered monocrystal material, namely the first sintered material, is easily crushed.

The preparation method for a modified monocrystal high-nickel ternary material provided in an example of the present disclosure is very simple and easy to industrialize, and has a broad application prospect.

The description above shows only specific embodiments of the present disclosure and is not intended to limit the scope of implementation of the present disclosure. Therefore, all substitutions of equivalent components, or equivalent changes and modifications made in the scope of protection of the disclosure patent still fall within the scope covered by the present patent. In addition, technical features, technical features and technical disclosures as well as technical disclosures of the present disclosure can be freely combined for use.

## Claims

1. A preparation method for a modified monocrystal high-nickel ternary material, comprising following steps:
S1: pre-sintering a high-nickel ternary hydroxide precursor under a condition of pure oxygen to obtain a pre-sintered material;
S2: fully mixing the pre-sintered material with a micro-powder of lithium hydroxide, a nano-dopant and an alumina pellet, and subjecting a mixture to a first sintering in a pure oxygen atmosphere after the alumina pellet is removed by sieving, followed by natural cooling in a pure oxygen atmosphere after the first sintering is completed to obtain a first sintered material;
S3: crushing the first sintered material, fully mixing the first sintered material with a nano-coating agent, and then subjecting a mixed material to a second sintering in a pure oxygen atmosphere to obtain a second sintered material; and
S4: subjecting the second sintered material to crushing, sieving and demagnetizing to obtain the modified monocrystal high-nickel ternary material.

2. The preparation method according to claim 1, wherein in the S1, a composition of the high-nickel ternary hydroxide precursor is represented as NiₓCo_{y}Mn_{(1-x-y)}(OH)₂, wherein x is equal to or greater than 0.90 and less than 1, and y is greater than 0 and equal to or less than 0.1;
preferably, in the S1, a particle size range of the high-nickel ternary hydroxide precursor is 2.5µm to 4.5µm based on D50, a specific surface area of the high-nickel ternary hydroxide precursor is 8m²/g to 15m²/g, and a tap density of the high-nickel ternary hydroxide precursor is 1.6g/cm³ to 2.0g/cm³;
preferably, in the S1, the pre-sintering is performed at 400°C to 600°C for 3h to 5h.

3. The preparation method according to claim 1, wherein in the S2, a particle size range of the micro-powder of lithium hydroxide is 5µm to 15µm based on D50;
preferably, the pre-sintered material and the micro-powder of lithium hydroxide are proportioned at a Li-M molar ratio of 1.0 to 1.1, wherein M represents a transition metal in the pre-sintered material;
preferably, in the S2, a diameter range of the alumina pellet is 15mm to 25mm;
preferably, in the S2, based on a total weight of the mixture as 100%, a mass content of the alumina pellet is 30% to 60%.

4. The preparation method according to claim 1 or 3, wherein in the S2, the nano-dopant comprising one or more of Al₂O₃, ZrO₂, WOs, MgO, TiO₂, B₂O₃, SrCOs, NbzOs and La₂O₃;
preferably, a molar content of the nano-dopant of a molar content of the high-nickel ternary hydroxide precursor is 0.1% to 0.5%.

5. The preparation method according to claim 1 or 3, wherein in the S2, the first sintering comprising: performing sintering at a first sintering temperature for a certain period of time, then increasing a temperature to a second sintering temperature for sintering, and finally performing annealing to a third sintering temperature for sintering;
preferably, the first sintering comprising: performing sintering at 450°C to 550°C for 3h to 6h, then increasing the second sintering temperature to 730°C to 800°C for sintering for 12h to 18h, and finally performing annealing at the third sintering temperature of 500°C to 700°C for sintering for 1h to 3h.

6. The preparation method according to claim 1, wherein in the S3, a particle size range of a material obtained after the crushing is 3µm to 5µm based on D50;
preferably, in the S3, the nano-coating agent comprising one or more of Al₂O₃, ZrO₂, WOs, TiO₂, H₃BO₃, Co(OH)₂, LiAlO₂ and Li_{1.3}Al_{0.3}Ti_{1.7}(PO₄)₃;
preferably, in the S3, a mass of the nano-coating agent of a mass of the first sintered material is 0.1% to 1%;
preferably, in the S3, the second sintering is performed at a temperature of 400°C to 700°C for 4h to 6h.

7. The preparation method according to claim 1, wherein in the S4, processes of the crushing, the sieving and the demagnetizing are performed in an environment with a relative humidity of less than 10%.

8. A modified monocrystal high-nickel ternary material, wherein the modified monocrystal high-nickel ternary material is prepared by the preparation method for a modified monocrystal high-nickel ternary material according to any one of claims 1 to 7, and is a modified monocrystal high-nickel ternary material LiNiₓCo_{y}Mn_{(1-x-y)}O₂ coated with a nano-coating agent, wherein x is equal to or greater than 0.90 and less than 1, and y is greater than 0 and equal to or less than 0.1.

9. Use of the modified monocrystal high-nickel ternary material according to claim 8 as a cathode material of a lithium ion battery.

10. A lithium ion battery, wherein a cathode material of the lithium ion battery is the modified monocrystal high-nickel ternary material according to claim 8.
